# EUROPEAN PATENT APPLICATION

(11) **EP 1 811 391 A1**
(43) Date of publication of application: **25.07.2007**
(21) Application number: 05795655.9
(22) Date of filing: 19.10.2005
(51) Int. Cl.: G06F 13/00

(54) **FILE TRANSFERRING SYSTEM, TRANSMITTING DEVICE AND RECEIVING APPARATUS**

(30) Priority: 29.10.2004 JP 2004315485
(71) Applicant: MATSUSHITA ELECTRIC INDUSTRIAL CO., LTD., Osaka 571-8501 (JP)
(72) Inventor: NAKATSUKA, Monta c/o Matsushita Electric Industrial. Co., Ltd., Osaka-shi, Osaka 540-6319 (JP); TAKECHI, Hideaki c/o Matsushita Electric Industrial. Co., Ltd., Osaka-shi, Osaka 540-6319 (JP); KOSHINO, Toshiharu c/o Matsushita Electric Industrial. Co., Ltd., Osaka-shi, Osaka 540-6319 (JP)
(74) Representative: Pautex Schneider, Nicole Véronique
(86) International application number: PCT/JP2005/019188
(87) International publication number: WO 2006/046445

(57) **Abstract**

In order to provide a file transfer system in which a transmitting device verifies a file transfer capability of a receiving device and which enables efficient file transfer in the case where the transmitting device autonomously transfers files to the receiving device via a network using an HTTP POST method, information (401 and 402) for inquiring about a sink device's capability of interruption/restart of file transfer is described in metadata 400 to be inputted at the time of sending a CDS:CreateObject action request defined in UPnP-AV standard, when a source device verifies on whether a sink device is capable of restart/interruption of file transfer.

## Description

### Technical Field

The present invention relates to a file transfer system, a transmitting device and a receiving device for performing file transfer via a network, and in particular, to a file system, a transmitting device and a receiving device for performing file transfer which involves management of information (metadata) attached to a file.

### Background Art

Recently, along with the development of the broadband internet access technologies such as xDSL and optical fiber, there has been a rapid widespread of the internet access, disregarding whether for business or home use. In addition, a home network environment in which personal computers (PCs) and household electrical appliances at home are connected via an Ethernet (registered trademark) or a wireless LAN has become popular. Under such circumstances, Internet Protocol (IP) defined by the Internet Engineering Task Force (IETF) has enabled mutual connections not only among the PCs but also among the home appliances such as a TV, a DVD recorder, an air conditioner and a refrigerator.

Application programs for use on the Internet and a home network include an application program for transferring files between home appliances and PCs. For example, such an application enables a transfer of a TV program recorded by a DVD recorder to a PC for editing or provides a dubbing function through the transfer of a recorded MPEG-2 file between DVD recorders.

Protocols for performing such a file transfer, in general, are required to transfer files without errors, but real-time transfer is not necessarily required. Representative protocols for transferring files in compliance with the IP include a Hyper Text Transfer Protocol (HTTP) defined by RFC2616 and a File Transfer Protocol (FTP) defined by RFC959. Either of the protocols assures reliability in transfer by a retransmission function of a Transmission Control Protocol (TCP) defined by RFC793.

In other words, the TCP includes a procedure for detecting an error in a packet and retransmitting the packet, and a procedure for detecting a missing packet and retransmitting the packet. Therefore, the TCP can assure proper file transfer even when an error or packet missing is caused on a transmission channel. There is, however, a limit in the retransmitting procedure of the TCP, and a problem is that in the case where a transfer is interrupted for a long period of time due to the dysfunction of a transmission channel or for the reasons related to a transmitting device (hereinafter to be referred to as "source device") or a receiving device (hereinafter to be referred to as "sink device"), a TCP connection is disconnected due to time out and the file transfer is no longer enabled thereafter. The reasons related to the devices here include, besides the dysfunction of the devices, a case in which file transfer should be interrupted in order to execute other function equipped to a device, e.g., interruption of file transfer in order that a DVD recorder can execute prescheduled recording.

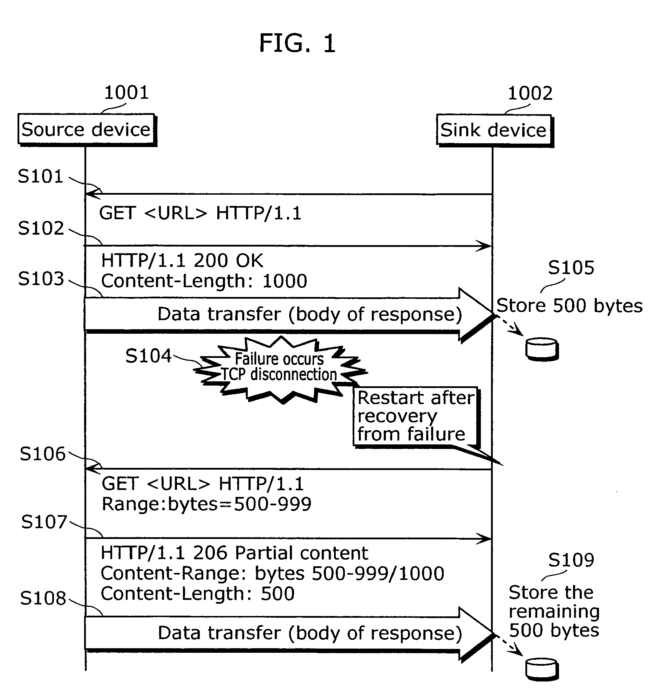

The HTTP already includes a procedure for solving the above-mentioned problem. Therefore, even in the case where a transfer is interrupted for a long period of time, a sequence is defined to re-estabiish a TCP connection and to restart file transfer from the position immediately after the position at which the transfer is interrupted. The sequence will be described with reference to FIG. 1.

FIG. 1 is a diagram showing an example of a communication sequence related to a restart of file transfer in the conventional file transfer system configured of a source device and a sink device. Note that FIG. 1 illustrates a file transfer from a source device 1001 to a sink device 1002 based on a request of "HTTP GET request" from the sink device 1002.

In the process, first, the sink device 1002 issues "HTTP GET request" to the source device 1001 (S101). Then, the source device 1001 sends "200 OK" in response to the request (S102), and starts transmitting a file of 1000 bytes (S103). In the diagram, it is assumed that a failure has occurred during the communication (S104), the TCP connection is disconnected, and data of 500 bytes has been stored in the sink device 1002 (S105). In this case, the sink device 1002 waits for the recovery from the communication failure, reestablishes a TCP connection at an arbitrary timing, so as to be able to restart the transfer. The transfer is restarted by the fact that the sink device 1002 requests for the remaining file starting from the 501^{th} byte data by sending, to the source device 1001, "HTTP GET request" with a Range header attached (S106).

The source device 1001 then transmits the file according to Range (data of 500^{th} to 999^{th} byte) specified by the sink device 1002 (S107 and S108), and the sink device 1002 saves the transmitted file (S109). Thus, by restarting the transfer without retransmitting the already-transferred data, it is possible to obtain only the data that is not yet transferred. The file transfer system shown in the diagram thus enables assured distribution of missing data by the fact that the sink device 1002 previously stores a block to restart a file transfer. The above-mentioned process is used, for instance, in an application program for efficiently obtaining a file following the already-transferred file when a failure occurs during the download of a file of some megabytes placed in a server on the Internet.

Moreover, a technology of providing data by use of the HTTP GET method as described above is disclosed (see Patent Reference 1).
Patent Reference 1: Japanese Laid-Open Patent Application No. 2002-288162

### Disclosure of Invention

### Problems that Invention is to Solve

The interruption and restart procedures as defined in the HTTP in the conventional file transfer system, as described above, can be employed in the HTTP GET method for requesting a file transfer from a receiving device side through client's manual operation. It is, however, a problem that these procedures cannot be employed in an HTTP POST method.

This is not a problem in the case of downloading a file from a server on the Internet to a PC, where the HTTP GET method is applied. In the case of transferring a file between arbitrary devices connected to a network, particularly when a source device (e.g. a home DVD recorder) autonomously attempts to send a given file to a sink device (e.g. a home PC), the HTTP POST method is usually employed. Therefore, in such a case, it is a problem that the interruption and restart of file transfer cannot be executed.

Generally speaking, this problem is attributed to the fact that the conventional file transfer protocol for performing push-type flow control, using, as a trigger, the transmission of data from a transmitting device to a receiving device, unlike pull-type flow control which issues a request from a receiving device to a transmitting device, lacks a procedure performed by a transmitting device to verify a file transfer capability equipped to a receiving device, or lacks the procedures for the interruption and restart of a file transfer.

The file transfer protocol for autonomously transmitting data from a transmitting device to a receiving device using the HTTP POST method or the like does not define a procedure performed by a transmitting device to verify a receiving device's capability of interruption/restart of file transfer.

The present invention is conceived in view of the above problems, and an object of the present invention is to provide a file transfer system, a transmitting device and a receiving device that allow a transmitting device to verify the receiving device's capability of interruption/restart of file transfer even in the case of using a file transfer protocol for performing push-type flow control under which the transmitting device autonomously transmits a file to the receiving device using the HTTP POST method, and that enable efficient restart of transfer of the remaining file, even when a network is disconnected for the reasons related to the devices or due to the time out in a TCP connection.

### Means to Solve the Problems

In order to achieve the above-mentioned object, the file transfer system according to the present invention is a file transfer system for transferring a file between a transmitting device and a receiving device via a network. The transmitting device transmits a file and the receiving device receives the file. The transmitting device includes: a capability verification unit which verifies a file transfer capability of the receiving device; a transmission unit which transmits file data composing the file to the receiving device; and a transmission control unit which causes the transmission unit to transmit the file data, according to the file transfer capability. The receiving device includes: a capability response unit which responds to the capability verification regarding file transfer, which is performed by the transmitting device; a reception unit which receives the file data composing the file; and a reception control unit which causes the reception unit to receive the file data, according to the capability.

The capability response unit responds with respect to a capability regarding a range header extension unique to a Hyper Text Transfer Protocol (HTTP) POST method or an HTTP PUT method, and the capability verification unit which verifies the file transfer capability of said receiving device by verifying the receiving device's capability regarding the range header extension.

The transmission unit transmits the file data to the receiving device using a Hyper Text Transfer Protocol (HTTP) POST method or an HTTP PUT method, and the reception unit receives the file data transmitted from the transmitting device using HTTP POST method or the HTTP PUT method.

With the configuration as described above, even in the case of using the file transfer protocol for autonomously transmitting data from a transmitting device to a receiving device using the HTTP POST method or the like, it is possible for the capability verification unit of the transmitting device to verify the receiving device's capability related to file transfer by verifying the receiving device's capability with regard to the range header extension which is unique to the HTTP POST method or PUT method, and thus enables the transmission control unit to control the transmission of file data according to the file transfer capability provided to the receiving device.

The transmitting device further includes a command generation unit which generates an information obtainment command for obtaining, by the receiving device, information relating to the file transfer. The transmission unit transmits the information obtainment command to the receiving device. The receiving device further includes a recording unit which records, in a range header of a Hyper Text Transfer Protocol (HTTP) POST method or an HTTP PUT method, a total size of the file including the received file data, and a file size with which an actual transfer of the file data is completed, and the capability response unit returns the information recorded by the recording unit in response to the information obtainment command from the transmitting device.

The recording unit further records a file transfer status using the HTTP POST method or the HTTP PUT method, and the capability response unit returns the recorded file transfer status in response to the information obtainment command from the transmitting device.

With the above-mentioned configuration, the file transfer system according to the present invention enables the receiving device to obtain the information related to file transfer, such as an actual transfer completion size and a file transfer status of file data, through the transmission of an information obtainment command from the transmitting device to the receiving device. Therefore, even in the case of using the file transfer protocol for performing push-type flow control based on the HTTP POST method, it is possible to achieve more efficient restart of file transfer such as a verification of the interruption/restart capability of the receiving device performed by the transmitting device and a transfer only of data that is not transferred yet.

Moreover, the present invention can be realized as a transmission method and a reception method which includes, as steps, the characteristic components in the respective transmitting device and receiving device of the present invention, and as a program for causing a computer to execute each of the steps. Such a program can be surely distributed via a storage media such as a CD-ROM and a communication media such as the Internet.

### Effects of the Invention

The file transfer system of the present invention enables verification of the receiving device's capability of interruption/restart of file transfer, and it is thus possible to efficiently restart file transfer by sending only the data that is not yet transferred, even in the case of using particularly the file transfer protocol for performing push-type flow control based on the HTTP POST method.

### Brief Description of Drawings

FIG. 1 is a communication sequence diagram showing a conventional file transfer system.
FIG. 2 is a communication sequence diagram showing a file transfer system according to a first embodiment of the present invention.

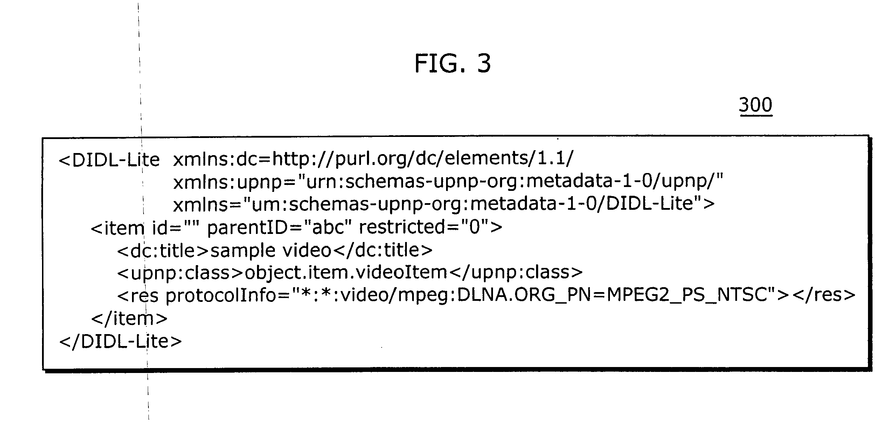

FIG. 3 is a reference drawing illustrating general metadata inputted when a CreateObject action request is made.
FIG. 4 is a reference drawing illustrating metadata inputted when a CreateObject action request is made, according to the first embodiment.
FIG. 5 is a reference drawing illustrating metadata generated in a sink device according to the first embodiment.
FIG. 6 is a reference drawing illustrating metadata generated in the sink device according to the first embodiment.
FIG. 7 is a functional block diagram showing a source device according to the present invention.
FIG. 8 is a functional block diagram showing the sink device according to the present invention.
FIG. 9 is a sequence diagram showing interruption of file transfer according to a second embodiment of the present invention.
FIG. 10 is a sequence diagram showing interruption of file transfer according to a third embodiment of the present invention.
FIG. 11 is a sequence diagram showing interruption of file transfer according to the third embodiment.
FIG. 12 is a sequence diagram showing interruption of file transfer according to the third embodiment.
FIG. 13 is a reference drawing showing metadata managed in the sink device according to the second embodiment.
FIG. 14 is a reference drawing showing metadata managed in the sink device according to the third embodiment.

### Numerical References

- 101: Source device
- 102: Sink device
- 300, 400, 500, 600, 1300, 1400: Metadata
- 701: User interface
- 702: File transmission control unit
- 703: File control unit
- 704: Communication control unit
- 705: File storage unit
- 706: Network interface
- 707: File to be transferred
- 708: Information(metadata) of file
- 801: File reception control unit
- 802: File control unit
- 803: Communication control unit
- 804: File storage unit
- 805: Network interface
- 806: Transferred file
- 807: Information (metadata) of transferred file

### Best Mode for Carrying Out the Invention

The following describes the best modes for implementing the present invention, with reference to the drawings.

### (First Embodiment)

Hereinafter, the file transfer system according to the first embodiment of the present invention will be described with reference to the drawings.

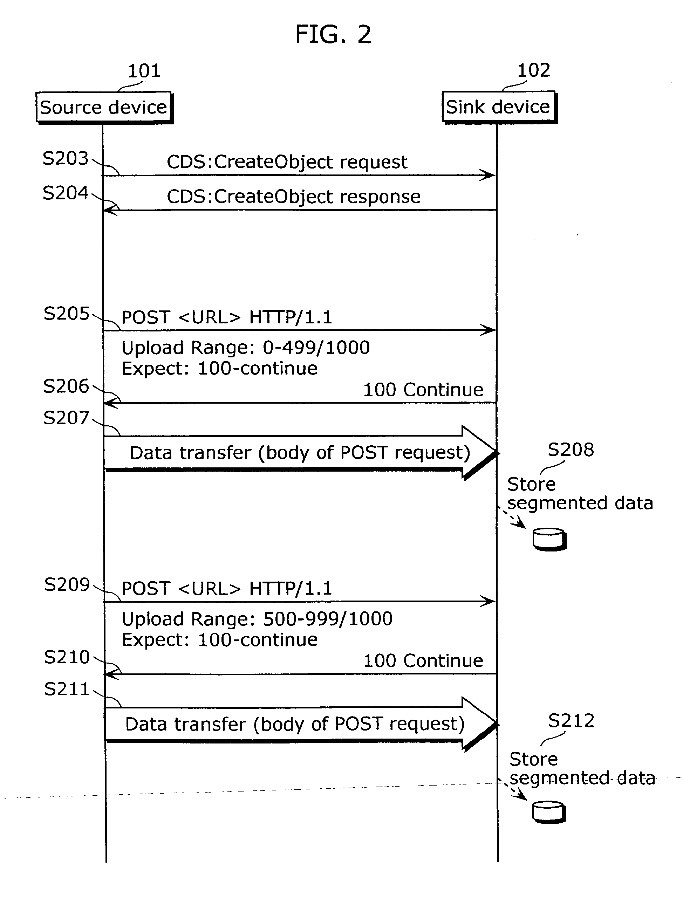

As shown in FIG. 2, a source device 101 as a transmitting device and a sink device 102 as a receiving device respectively incorporates a storage media, and can store files. The examples of such devices include a DVD/HDD hybrid recorder equipped with a network connection terminal. According to the embodiment, in the initial state, the source device 101 stores files to be transferred, and stores a file in the sink device 102 by transferring the file to the sink device 102 via a network. Note that both of the sink device 102 and the source device 101 are compliant with the UPnP-AV standard issued by the Universal Plug and Play Forum, and the sink device 102 is equipped with a Contents Directory Service (CDS) server function while the source device 101 is equipped with a Control Point function to access a CDS server.

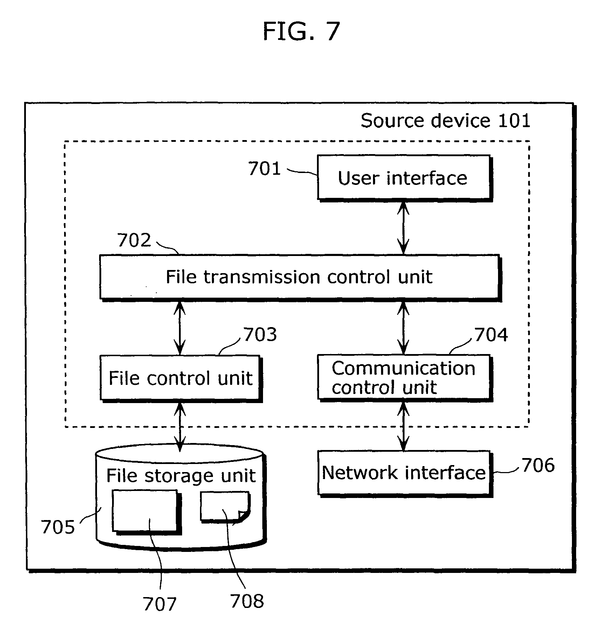

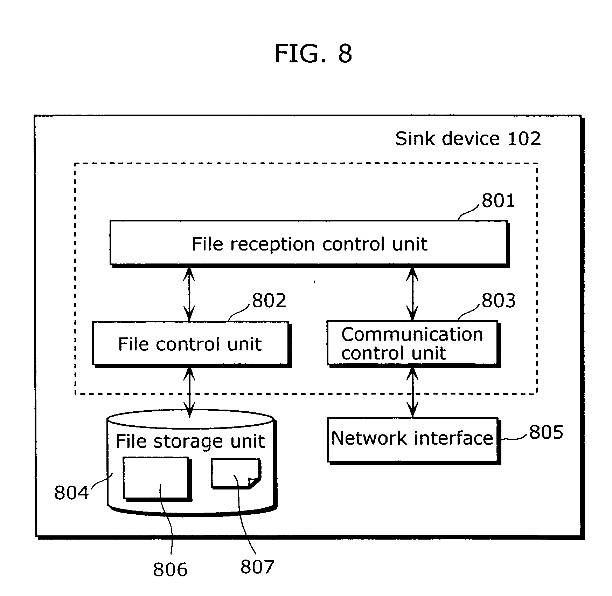

The detailed configuration of the source device 101 will be described with reference to other drawings. FIGS. 7 and 8 are functional block diagrams respectively showing the source device 101 and the sink device 102.

In FIG. 7, the source device 101 is configured of the following: a user interface 701; a file transmission control unit 702; a file control unit 703 which controls reading of files from a file storage unit 705; a communication control unit 704 which performs communication control by controlling a network interface 706 via a network; the file storage unit 705 in which an entity file 707 and a file object 708 being information (metadata) of the entity file are stored together; and the network interface 706.

The source device 101 controls the user interface unit 701 and displays a list of the files stored in the file storage unit 705. The source device 101 then reads out, from the file storage unit 705, the file selected from the list by the user, controls the network interface 706, and transmits the file to the sink device 102.

In FIG. 8, the sink device 102 is configured of the following: a file reception control unit 801; a file control unit 802 which writing of files into a file storage unit 804; a communication control unit 803 which performs communication by controlling a network interface 805 via a network; the file storage unit 804 in which an entity file 806 and file information (metadata) 807 are generated and stored after the completion of the file transfer from the source side; and the network interface 805.

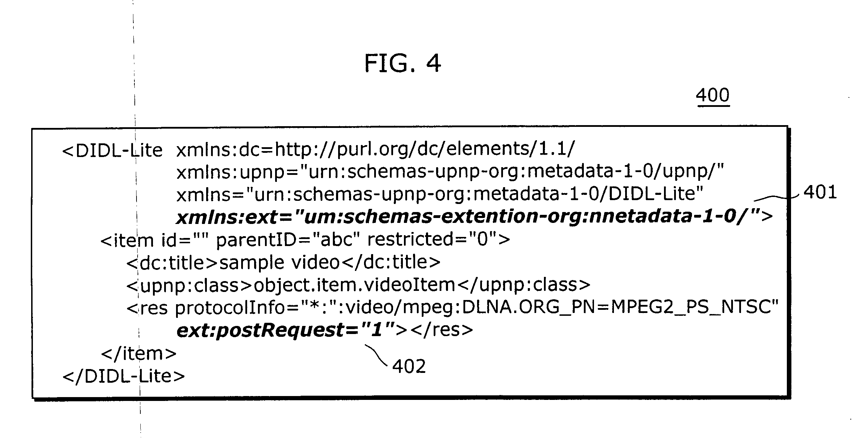

With the configuration as described above, the source device 101 issues a CDS:CreateObject action request defined in the UPnP-AV standard to the sink device 102 prior to the transfer of the entity file 707 (S203), as shown in FIG. 4.

In the CDS:CreateObject action request, a file object 807 generated from the file object 708 being file information (metadata) is described. The file object 807 of the first embodiment is in XML data format as shown in FIG. 4, and indicates metadata 400 that is inputted at the time of sending CDS:CreateObject action request in S203 when the sink device 102 verifies whether restart/interruption of file transfer can be performed. According to the embodiment, besides the conventional, general metadata 300 to be inputted at the time of sending CDS:CreateObject action request, information (401 and 402) for inquiring about the sink device's capability of interruption/ restart of file transfer is added to the CDS:CreateObject action request.

In FIG. 4, "ext:postRequest="1""(402) is described, however, the embodiment is not limited to such character string and numerical value. Having received CDS:CreateObject action request, the sink device 102 adds metadata such as the location of a directory and a file name to the file object 807 upon the storage of the file object 807 into the file storage unit 804. The metadata particularly includes an URL on the sink device 102 for which a file entity should be stored, and the added file object 807 is notified to the source device 101 through the sending of CDS:CreateObject action response shown in S104.

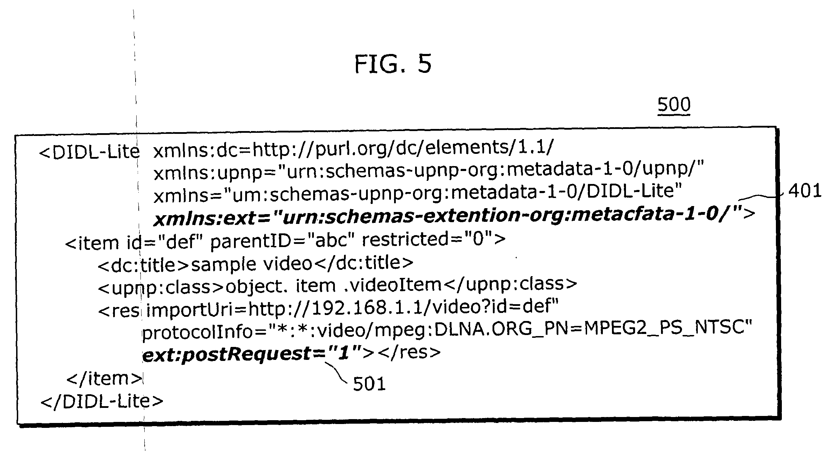

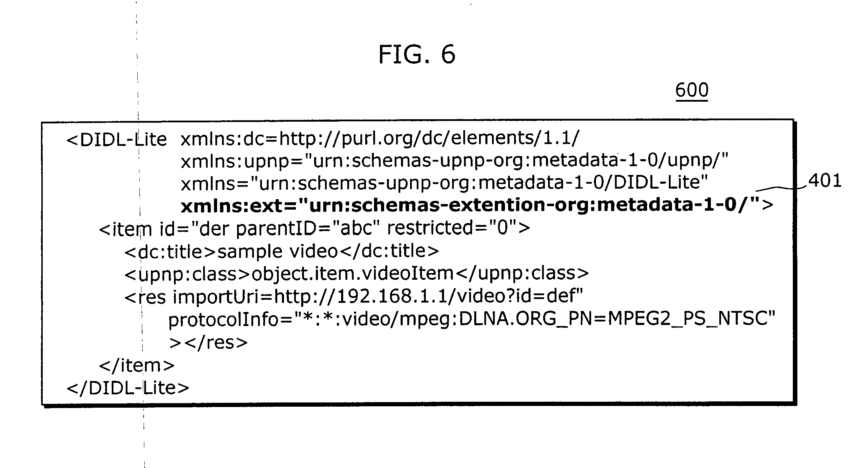

In the embodiment, as shown in the metadata 500 in FIG. 5 to be inputted at the time of sending CDS:CreateObject action response in the case where OK is sent in response to the request from the source device 101 for the verification of the restart/interruption of file transfer, "ext:postRequest="1" is described as information for the notification of the file transfer interruption/restart capability of the sink device 102. In the case where the sink device 102 is not equipped with the file transfer interruption/restart capability, either "ext:postRequest="1"" is not described as shown in the metadata 600 in FIG. 6 or "ext:postRequest="0"" is sent (S204).

Then, having received CDS:CreateObject action response from the sink device 102, the source device 101 determines the size with which the file is transferred in segments, after having judged that the restart/interruption of file transfer can be performed. The size for the segment transfer can be arbitrarily determined in view of frequency at which file transfer is interrupted or restarted, the size of the file which turns out to be a waste at the interruption, and overhead due to segmentation, or the like. Here, it is assumed that a file of 1000 bytes is transferred in the segments of first 0-499 bytes and the next 500-999 bytes, and the source device transfers the file based on the HTTP POST method (S205).

The POST method includes Upload Range:[byte-Range Total size] which is a header uniquely defined by the present invention. "byte-Range" indicates a range of the data included in HTTP Entity Body portion, while "total size" indicates a total size of 1000 bytes of the file to be transferred as a whole by the HTTP POST method. In S205, 0-499 bytes, which is the first segment transfer unit, is specified. The URL specified by the POST method includes the description of the URL included in the file object 807 that is described in the CreateObject action response. Thus, the sink device 102 can associate a specific file object with the entity of a received file. Moreover, in S205, since "Expect: 100-continue" is further described as a header, the sink device checks whether a POST request sent in S205 can be accepted with that URL, according to RFC2616, and returns 100 Continue response if possible (S206). With this operation, the sink device 102 can accept the POST request sent in S205, or in the case where the request cannot be accepted or analyzed, the sink device 102 can notify the source device of it so as to avoid unnecessary data transmission.

Then, the source device 101 starts the transmission of Entity Body based on the HTTP POST method (S207). The file range included in "Entity Body" is the range of 0-499 bytes only. Having received a file of 500 bytes, the sink device 102 stores the received file into the built-in file storage unit 807 (S208).

Next, according to the embodiment, having judged that the sink device 102 is capable of restart/interruption of file transfer, the source device 101 transmits the HTTP POST method for transmitting the next 500-999 bytes in segments (S209). Note that "byte-Range" included in "Upload Range:[byte-Range Total size] of the POST method specifies 500-999 bytes as the last segment transfer unit while "total size" indicates a total size of 1000 bytes of the file to be transferred as a whole based on the HTTP POST method.

Moreover, the URL specified by the POST method includes the description of the URL included in the file object 807 that is described in "CreateObject action response". In addition, in S209, since "Expect: 100-continue" is further described as a header, the sink device checks whether the POST request sent in S209 can be accepted with that URL, and sends "100 Continue response" if possible (S210).

Then, the source device 101 starts the transmission of Entity Body based on the HTTP POST method (S211). The file range included in "Entity Body" is 500-999 bytes only. Having received the file of 500 bytes, the sink device 102 stores the received file into the built-in file storage unit 807 and terminates a sequence of file transfer process (S212).

Thus, according to the file transfer system of the first embodiment, it is possible to transfer a file in segments even under the push-type flow control for transmitting files using the HTTP POST method. Note that other headers undoubtedly used in the HTTP method are not relevant to the operation of the present invention, and the descriptions shall be omitted. Also, the header name defined here may be different.

As described above, in the file transfer system according to the first embodiment, by adding, to metadata attached to a file, information for a new file transfer, it is possible for the source device 101 to autonomously verify the file transfer capability of the sink device 102.

Therefore, when the sink device 102 is incapable of interruption/restart of file transfer, the source device 101 proceeds to a sequence for executing a normal push-type file transfer which does not allow interruption/restart of file transfer. When the sink device 102 is capable of interruption/restart of file transfer, the source device 101 can proceeds to a sequence of executing a push-type file transfer which allows interruption/restart of file transfer.

Thus, it is possible, with the use of the HTTP POST method, for the source device 101, which performs file transfer, to segment a file and transfer the file with a clear indication of transfer range by an extended header. Therefore, in the case where it is verified that the sink device 102 is capable of restarting file transfer, the interruption/restart of the transfer of the segmented file is enabled.

### (Second Embodiment)

The following describes a file transfer system according to the second embodiment of the present invention with reference to the drawings. Note that the file transfer system according to the second embodiment is characterized in that a source device sends CDS:Browser request to a sink device in the case where a file transfer is interrupted during the file transfer for the reasons related to the source device. The internal configurations of the source device and the sink device according to the second embodiment are as described with reference to FIGS. 7 and 8 in the first embodiment, and the procedure up to the file transfer between the source device and the sink device using an arbitrary size is as described with reference to FIG. 2 in the first embodiment, and the descriptions shall be omitted.

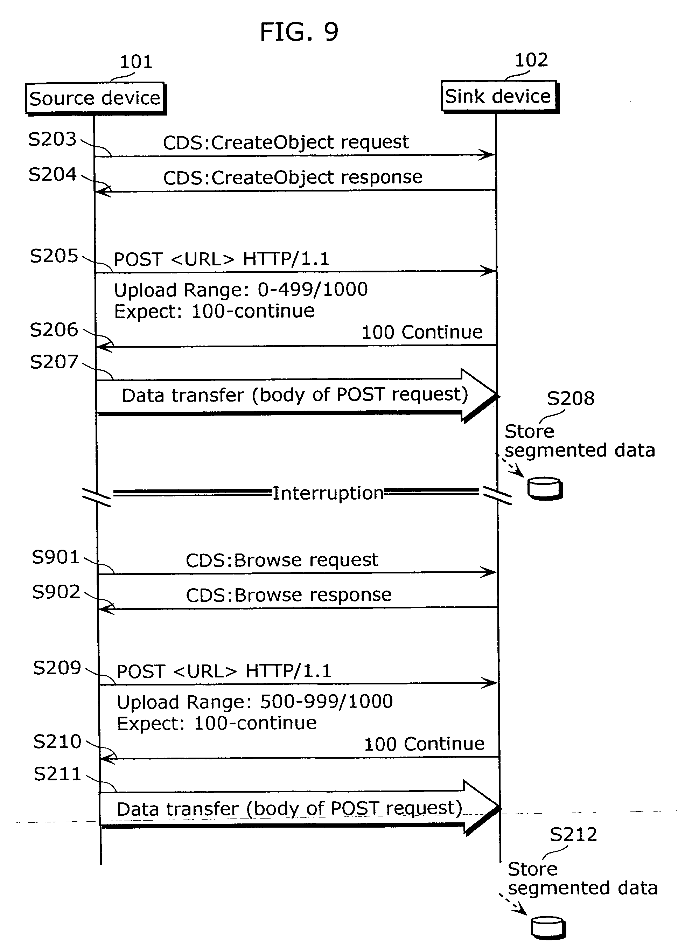

FIG. 9 describes a restarting sequence, according to the file transfer system of the second embodiment, for restarting from the state in which file transfer based on the POST method is interrupted for some reason. Note that the processes from S201 to S208 in FIG. 9 are as same as those described with reference to FIG. 2 in the first embodiment.

In this state, in the case where a file transfer based on the POST method is interrupted for some reason, the source device 101 sends CDS:Browse action request to the sink device 102 in order to specify the file size at which the file transfer should be restarted (S901), and obtains the file object 807 held in the sink device by sending CDS:Browse action response (S902). Note that "some reason" described above is, for instance, the case where a file is transferred using a DVD recorder which serves as a source device is interrupted by the start of TV viewing via the DVD recorder.

Then, having acquired "ext:POSTedSize="499/1000" described in the file object 807, the source device 101 can specify the size (499 bytes in the second embodiment) of the file received by the sink device 102 up to the interruption of the file transfer. Note that the subsequent processing of restarting the transfer of the remaining file of 500-999 bytes is as same as the processes from S209 to S212 in FIG. 2.

In the second embodiment of the present invention, after the sink device 102 has received the POST method shown in S205 in FIG. 2, the communication control unit 803 receives a packet via the network interface 805, the file reception control unit 801 reads the size received using the POST method from "byte-Range" in "Upload Range: [byte-Range Total size]", further reads the total size to be received as a whole, and temporarily stores the sizes in a memory via the file control unit 802.

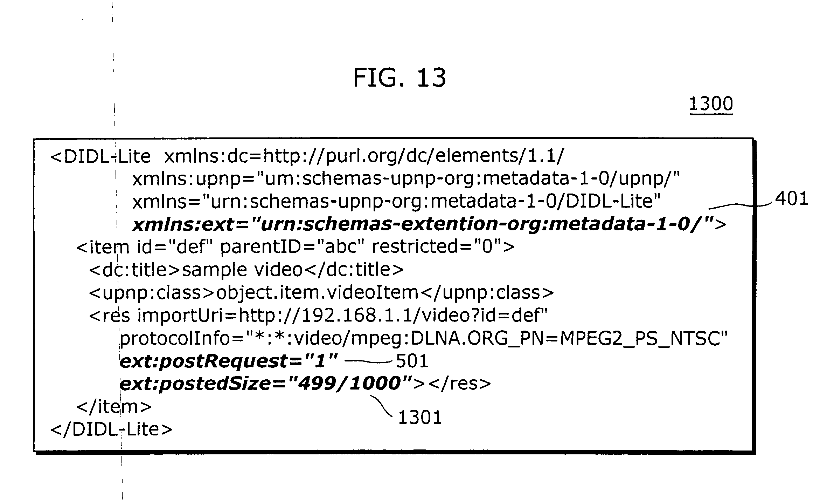

Upon the completion of the actual data transfer in S207 of FIG. 9, the received file information is added to the file object 807 stored in the file storage unit 804. The file object 807 to which the file information is thus added shall be described in detail with reference to FIG. 13. FIG. 13 shows metadata 1300 managed on the side of the sink device 102, and "ext:POSTedSize="499/1000"" (1301) is added to the file object in FIG. 13, compared with the file object generated at the time when CDS:CreateObject action request is sent in S204 of FIG. 9, as shown in FIG. 5. "499" indicates the size of the file to be actually transferred using the POST method, and "1000" indicates a total size of the file.

At the time when the actual transfer size equals to the total size after the repetition of this process, it is regarded that the file transfer based on the POST method is completed.

As has been described above, according to the file transfer system of the second embodiment, it is possible, during the file transfer based on the HTTP POST method, to properly restart the transfer of a file that remains due to the interruption for some reason related to the source device.

### (Third Embodiment)

The following describes the file transfer system according to the third embodiment of the present invention with reference to the drawings. Note that the file transfer system according to the third embodiment is characterized by the management of file transfer after an interruption during the file transfer based on the POST method in accordance with the reason for interrupting the file transfer. The internal configurations of the source device and the sink device are as same as those described with reference to FIGS. 7 and 8 in the first embodiment. Also, the procedure up to the file transfer between the source device and the sink device using an arbitrary size is as described with reference to FIG. 2 in the first embodiment.

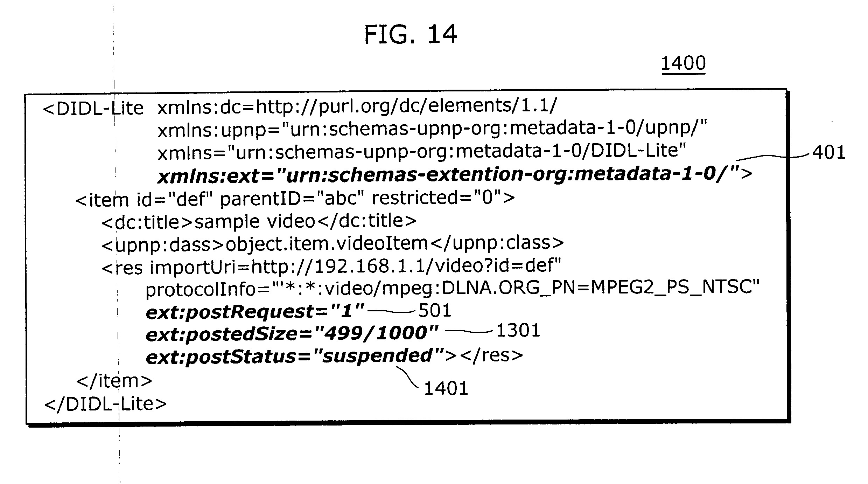

The third embodiment of the present invention describes the case where restarting operations are different depending on the reason for interruption. The sequence of starting the file transfer by the POST method is as described in FIG. 1. In the sink device 102, after the communication control unit 803 receives a packet of the first POST method via the network interface 805, the file reception control unit 801 adds "ext:postStatus="uploading"" to the file object 807 stored in the file storage unit 804. The file object 807 to which the information is added shall be described in detail with reference to FIG. 14.

FIG. 14 shows metadata 1400 managed by the side of the sink device 102. Compared with the file object, as shown in FIG. 5, generated when CDS:CreateObject action request is sent in S204 in FIG. 2 and "ext:postStatus="uploading""(1401) is added besides "ext:posted Size= "499/1000""(1301) as described with reference to FIG. 13. "ext:postStatus" describes the file transfer status in the sink device, and deletes "ext:postStatus" at the same time when the file transfer is completed.

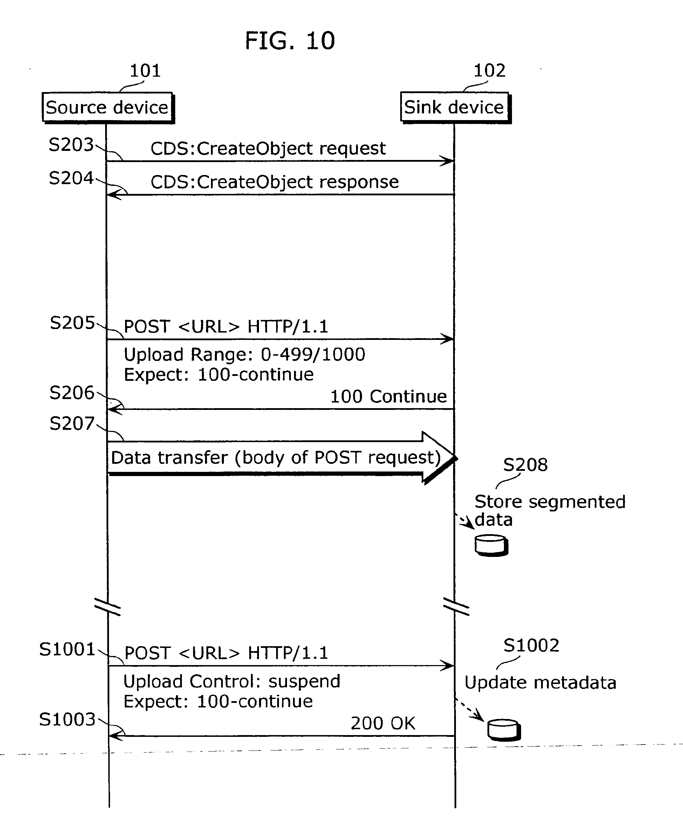

FIG. 10 shows a sequence to be performed in the case where the file transfer using the POST method is interrupted as judged by the user of the source device 101 or in the process executed by the processor.

In the case where the source device 101 interrupts the file transfer, the source device 101 notifies the sink device 102 of the interruption by transmitting the POST method in which Upload Control:suspend is attached to a header (S1001). In the sink device 102, the communication control unit 803 receives a packet via the network interface 805, and the file reception control unit 801 reads "Upload Control:suspend" received by the POST method and modifies the file object 807 stored in the file storage unit 804 so that "ext:postStatus="suspended"" is included (S1002). Next, the sink device 102 returns "200 OK" to the side of the source device 101 (S1003).

Then, the file reception control unit 801 of the sink device 102 checks the value of ext:postStatus" regularly or based on certain criteria for judgment. In the case where the value indicates "suspended", the sink device 102 judges that the file transfer is interrupted on purpose for the reason related to the source side, and can perform processing such as not deleting the file 806 and the file object 807. Upon the output of the file status to the user interface in the sink device 102, it is possible to cause the user to operate a file.

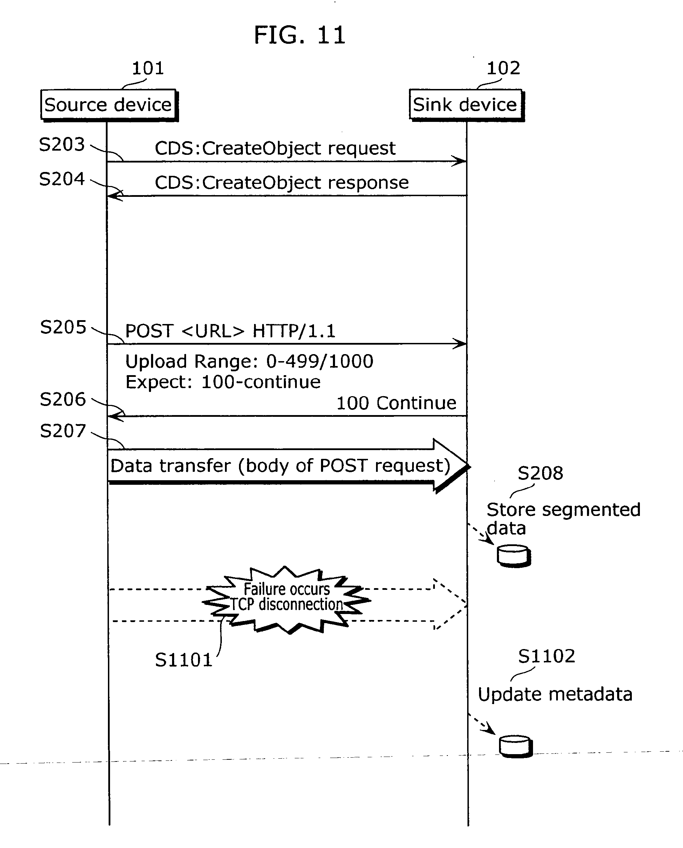

FIG. 11 shows the sequence to be performed in the case where a file transfer is interrupted due to a network failure. Note that the processes from S203 to S208 are as described with reference to FIG. 2.

In the case where a network failure occurs (S1101), a file transfer based on the POST method is interrupted and therefore a file reception is not performed in the sink device 102 within a certain period of time, the file reception control unit 801 modifies the file object 807 stored in the file storage unit 804 so that "ext:postStatus="disconnected"" is included.

Then, the file reception control unit 801 of the sink device 102 checks the value of "ext:postStatus regularly or based on certain criteria for judgment, In the case where the value indicates "disconnected", the sink device 102 judges that the file transfer is interrupted due to a network failure and can perform processing such as deleting the file 806 and the file object 807 stored in the file storage unit 805. Upon the output of the file status in the sink device 102 to the user interface, it is possible to cause the user to operate a file.

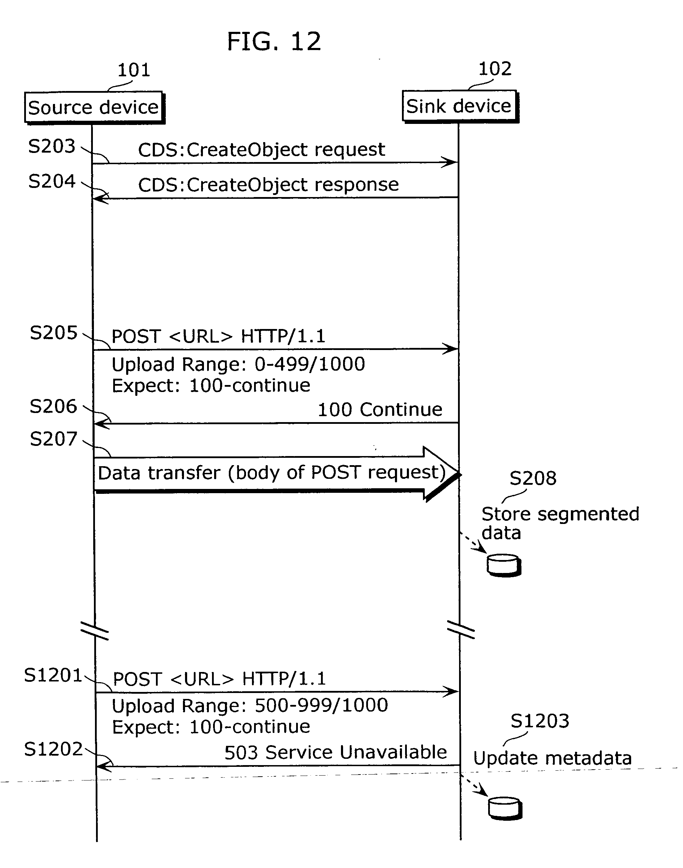

FIG. 12 shows a sequence to be performed in the case where a file transfer is interrupted for the reason related to the sink device 102. The processes from S203 to S208 are as described with reference to FIG. 1.

In the case where the sink device 102 desires to interrupt a file transfer for a reason such as disk capacity overflow, in response to the file transfer request transmitted based on the POST method (S1201), the sink device 102 returns "503 Service Unavailable" to the source device 101 (S1202), and the file reception control unit 801 of the sink device 102 modifies the file object 807 stored in the file storage unit 804 so that "ext:postStatus="disk full"" is included (S1203).

Then, the file reception control unit 801 of the sink device 102 checks the value of "ext:postStatus" regularly or based on certain criteria for judgment. In the case where the value indicates "disk full", the sink device 102 judges that a file transfer is interrupted because a file can no longer be stored due to disk capacity overflow, and can perform processing such as deleting the file 806 and the file object 807. Upon the output of the file status in the sink device 102 to the user interface, it is possible to cause the user to operate a file.

As has been described above, with the file transfer system according to the third embodiment, it is possible for the source device 101 to interrupt/start a file transfer at an arbitrary timing during a file transfer based on the POST method. In addition, even in the case where the sink device 102 interrupts a file transfer at an arbitrary timing, file operation and restart of efficient file transfer can be achieved depending on the reason for the interruption of the file transfer.

### Industrial Applicability

The file transfer system according to the present invention can be generally used in the case of transferring files between arbitrary devices connected to a network, using HTTP POST method. Such a file transfer system is effective especially in the case where the size of a file is large and unnecessary processing is to be generated if the file is transferred from the beginning when the transfer is interrupted and then restarted.

## Claims

1. A file transfer system for transferring a file between a transmitting device and a receiving device via a network, said transmitting device transmitting a file and said receiving device receiving the file,
wherein said transmitting device includes:
a capability verification unit operable to verify a file transfer capability of said receiving device;
a transmission unit operable to transmit file data composing the file to said receiving device; and
a transmission control unit operable to cause said transmission unit to transmit the file data, according to the file transfer capability, and
said receiving device includes:
a capability response unit operable to respond to the capability verification regarding file transfer, which is performed by said transmitting device;
a reception unit operable to receive the file data composing the file; and
a reception control unit operable to cause said reception unit to receive the file data, according to the capability.

2. The file transfer system according to Claim 1,
wherein said capability response unit is operable to respond with respect to a capability regarding a range header extension unique to a Hyper Text Transfer Protocol (HTTP) POST method or an HTTP PUT method, and
said capability verification unit is operable to verify the file transfer capability of said receiving device by verifying the receiving device's capability regarding the range header extension.

3. The file transfer system according to Claim 1,
wherein said transmission unit is operable to transmit the file data to said receiving device using a Hyper Text Transfer Protocol (HTTP) POST method or an HTTP PUT method, and
said reception unit is operable to receive the file data transmitted from said transmitting device using HTTP POST method or the HTTP PUT method.

4. The file transfer system according to Claim 1,
wherein in the case where said capability verification unit verifies that said receiving device is capable of interruption/restart of the file transfer, said transmission control unit is operable to proceed to a sequence for executing a push-type file transfer which allows interruption/restart of file transfer, and
in the case where said capability verification unit verifies that said receiving device is incapable of interruption/restart of the file transfer, said transmission control unit is operable to proceed to a sequence for executing a push-type file transfer which does not allow interruption/restart of file transfer.

5. The file transfer system according to Claim 1,
wherein said transmitting device further includes a command generation unit operable to generate an information obtainment command for obtaining, by said receiving device, information relating to the file transfer,
said transmission unit is operable to transmit the information obtainment command to said receiving device,
said receiving device further includes a recording unit operable to record, in a range header of a Hyper Text Transfer Protocol (HTTP) POST method or an HTTP PUT method, a total size of the file including the received file data, and a file size with which an actual transfer of the file data is completed, and
said capability response unit is operable to return the information recorded by said recording unit in response to the information obtainment command from said transmitting device.

6. The file transfer system according to Claim 5,
wherein said recording unit is further operable to record a file transfer status using the HTTP POST method or the HTTP PUT method, and
said capability response unit is operable to return the recorded file transfer status in response to the information obtainment command from said transmitting device.

7. The file transfer system according to Claim 6,
wherein the file transfer status is one of uploading, interruption due to a suspend request from a transmitting device, interruption due to network disconnection, and disk capacity overflow in a receiving device,
said receiving device further includes a storage unit operable to store the received file, and
in the case where the file transfer information indicates interruption due to network disconnection, the received file is stored in said storage unit and the file data received before the interruption can be deleted.

8. The file transfer system according to Claim 1,
wherein said transmission unit is further operable to transmit, to said receiving device, metadata which includes at least information for verifying whether interruption/restart of the file transfer can be performed, as a CDS:CreateObject action request defined by the UPnP-AV standard,
said reception unit is further operable to receive the metadata,
said capability response unit is operable to return a CDS:CreateObject action response defined by the UPnP-AV standard, based on the metadata, the response indicating whether or not interruption/restart of the file transfer can be performed, and
said capability verification unit is operable to verify the file transfer capability of said receiving device based on the response.

9. A transmitting device which transmits a file to a receiving device via a network, said transmitting device comprising:
a capability verification unit operable to verify a file transfer capability of the receiving device;
a transmission unit operable to transmit file data composing the file to the receiving device; and
a transmission control unit operable to cause said transmission unit to transmit the file data, according to the file transfer capability.

10. The transmitting device according to Claim 9,
wherein said capability verification unit is operable to verify the file transfer capability of the receiving device by verifying a receiving device's capability regarding a range header extension unique to a Hyper Text Transfer Protocol (HTTP) POST method or an HTTP PUT method.

11. The transmitting device according to Claim 9,
wherein said transmission unit is operable to transmit the file data using the HTTP POST method or the HTTP PUT method.

12. The transmitting device according to Claim 9, further comprising
a segmentation unit operable to segment the file transmitted to the receiving device into segments,
wherein in the case where said capability verification unit verifies that the receiving device is capable of interruption/restart of the file transfer, said transmission control unit is operable to cause said transmission unit to transmit the file in units of segmented file data segmented by said segmentation unit, and
said transmission unit is operable to transmit the segmented file data to the receiving device.

13. The transmitting device according to Claim 12, further comprising
a recording unit operable to record, in a range header of a Hyper Text Transfer Protocol (HTTP) POST method or an HTTP PUT method, at least one of a data range of a file including the segmented file data, and a total size of the file.

14. A receiving device which receives a file transmitted from a transmitting device via a network, said receiving device comprising:
a capability response unit operable to respond to a capability verification regarding file transfer, which is performed by said transmitting device;
a reception unit operable to receive file data composing the file; and
a reception control unit operable to cause said reception unit to receive the file data according to the capability.

15. The receiving device according to Claim 14,
wherein said capability response unit is operable to respond with respect to a capability regarding a range header extension unique to a Hyper Text Transfer Protocol (HTTP) POST method or an HTTP PUT method.

16. The receiving device according to Claim 14,
wherein said reception unit is operable to receive the file data transmitted from the transmitting device using a Hyper Text Transfer Protocol (HTTP) POST method or an HTTP PUT method.

17. A transmission method for transmitting a file to a receiving device via a network, said method comprising:
a capability verification step of verifying a file transfer capability of said receiving device;
a transmission step of transmitting file data composing the file to said receiving device; and
a transmission control step of causing said transmission unit to transmit the file data, according to the file transfer capability.

18. A reception method for receiving a file transmitted from a transmitting device via a network, said method comprising:
a capability response step of responding to a capability verification regarding file transfer, which is performed by said transmitting device;
a reception step of receiving file data composing the file; and
a reception control step of causing said reception unit to receive the file data according to the capability.

19. A program for use in a transmitting device which transmits a file to a receiving device via a network, said program causing a computer to execute:
a capability verification step of verifying a file transfer capability of said receiving device;
a transmission step of transmitting file data composing the file to said receiving device; and
a transmission control step of causing said transmission unit to transmit the file data, according to the file transfer capability.

20. A program for use in a receiving device which receives a file transmitted from a transmitting device via a network, said program causing a computer to execute:
a capability response step of responding to a capability verification regarding file transfer, which is performed by said transmitting device;
a reception step of receiving file data composing the file; and
a reception control step of causing said reception unit to receive the file data according to the capability.
